# EUROPEAN PATENT APPLICATION

(11) **EP 1 762 143 A1**
(43) Date of publication of application: **14.03.2007**
(21) Application number: 06014886.3
(22) Date of filing: 18.07.2006
(51) Int. Cl.: A01K 97/04, B65D 21/02

(54) **A receptacle**

(30) Priority: 07.09.2005 GB 0518209
(71) Applicant: FOX INTERNATIONAL GROUP LIMITED, Hainault, Essex IG6 3UT (GB)
(72) Inventor: Cottis, Maxwell Stewart, Braintree Essex CM7 9FD (GB)
(74) Representative: Crouch, David John

(57) **Abstract**

A receptacle (10), especially but not exclusively for a fishing lure, comprising side walls (12) which define a hollow cylinder. The side walls (12) are provided with engagement means (14, 20) to enable a multiplicity of such receptacles (10) to be releasably secured together with their respective axes generally parallel to one another and such that they form a matrix of receptacles (10) as viewed along their axes.

## Description

The present invention relates to a receptacle, especially but not exclusively for a fishing lure, comprising side walls which define a hollow cylinder.

Hitherto, such a receptacle has been one of a matrix of such receptacles created by crisscrossing panels of wood. This enables lures to be stored in respective receptacles, reducing the likelihood of entanglement between one lure and its associated hook and another, and making it easier for the user to access the lure he wants.

A disadvantage of such a construction is that it is cumbersome and not readily altered so that the number of receptacles corresponds to the needs of the user.

The present invention seeks to provide a remedy.

Accordingly, the present invention is directed to a receptacle having the construction set out in the opening paragraph of the present specification in which the side walls are provided with engagement means to enable a multiplicity of such receptacles to be releasably secured together with their respective axes generally parallel to one another and such that they form a matrix of receptacles as viewed along their axes.

Preferably, the receptacle is generally rectangular, even more preferably square, in cross-section. This facilitates a particularly easy construction to form the matrix, although it would be conceivable to build a matrix from cylinders of hexagonal cross-section to create a matrix with a honeycomb-like construction. Such a matrix would be more readily accommodated in a bag of circular cross-section.

The engagement means may comprise both male and female forms, such that each male form engages with a female form of an immediately adjacent receptacle when such a matrix is created.

The receptacle can be part of a matrix of identical receptacles if successive walls progressing around the axis of the receptacle are provided at a given position along that axis with engagement means which alternate between male and female forms.

In the case of a receptacle of rectangular or square cross-section, this means that a pair of opposite sides of the rectangle or square are formed with male form engagement means and the other pair of opposite side walls are provided with female form engagement means at that position.

Preferably, the receptacle is generally elongate and each side wall of the receptacle provided with two engagement means spaced apart along the axis of the cylinder. This improves the rigidity of the matrix formed by a multiplicity of such receptacles. For each wall these engagement means may be both female, or both male, or each wall may have one male and one female form.

Each male form engagement means may comprise a shank portion which extends outwardly from a side wall of the receptacle, terminating at a head portion. The shank portion may have a generally circular cross-section and the shank may be generally disc shaped, with a cross-section larger than that of the shank portion. The length of the shank portion may be no more than sufficient to accommodate the thickness of the wall of an adjacent receptacle.

Each female engagement means may comprise an aperture in the form of a keyhole or a dumbbell shape such that the larger end portion in the case of the keyhole shape or one of the end portions in the case of the dumbbell shape is sufficiently large to enable the disc-shaped head portion of the male form to pass through it, whereas the narrower end in the case of the keyhole shape or the bridging portion in the case of the dumbbell shape is sufficiently wide to accommodate the shank portion of the male form, but too narrow to enable the head portion of the male form to be passed through it.

The narrower end portion in the case of the keyhole shape or the bridging portion in the case of the dumbbell shape may have a wider central portion so that the shank portion of the male form will snap fit into that end portion or central portion as the case may be.

An end of the receptacle may be formed with axially extending slots opening out at that end of the cylinder to facilitate the attachment of the hook of a fishing lure or other device. Each receptacle may be provided with further engagement means in the form of a slot or a groove on the outside of each side wall of the receptacle, slots and grooves alternating with one another as one progresses around the axis of the receptacle. This means that when such a matrix is formed, the rib on one receptacle will engage a groove on an immediately adjacent receptacle.

The receptacle is preferably open at both ends to facilitate drainage and easy washing or rinsing of the fishing lures or other contents held in the receptacle.

The present invention extends to such a matrix of receptacles.

An example embodiment of a receptacle made in accordance with the present invention will now be described in greater detail with reference to the accompanying drawings, in which:
Figure 1 is a perspective side view of a receptacle, viewed from above;
Figure 2 shows a view from directly above of the receptacle shown in Figure 1;
Figure 3 shows a side view of the receptacle shown in Figure 1, viewed in the direction indicated by the arrow III in Figure 1;
Figure 4 shows a side view of the receptacle shown in Figure 1, viewed in the direction of the arrow IV shown therein;
Figure 5 shows a perspective view from one side and from above of a matrix of receptacles as shown in each of Figures 1 to 4;
Figure 6 shows a view from directly above of the matrix of receptacles shown in Figure 5;
Figure 7 shows a side view of the matrix shown in Figure 5 viewed along the direction VII in that Figure; and
Figure 8 shows a side view of the matrix of receptacles shown in Figure 5 along the arrow VIII shown in that Figure.

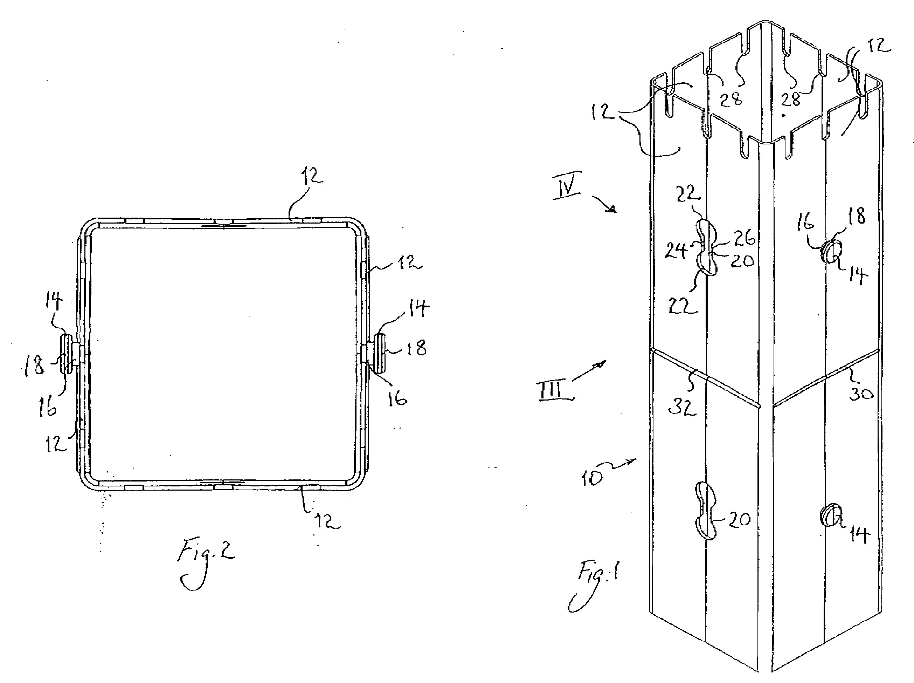

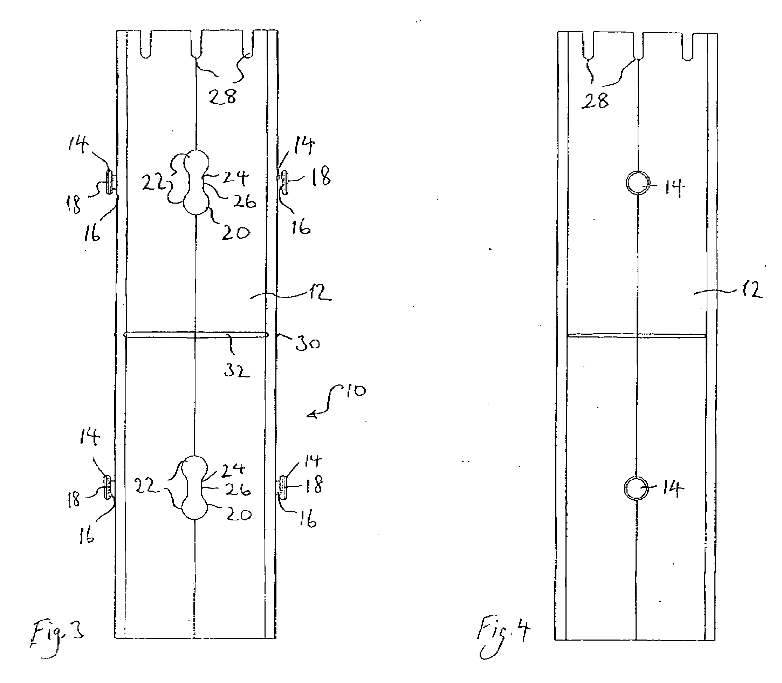

Figures 1 to 4 show a generally hollow elongate cylindrical plastics receptacle 10 having four side walls 12 which are integral with one another being joined at the corners of the receptacle 10 to define a hollow cylinder which is open at both ends.

A first side wall 12 is provided with two male form engagement means in the form of studs 14 spaced apart along the axis of the receptacle and projecting outwardly from that wall 12. Both are spaced inwardly from one end of the receptacle by a distance which is substantially a quarter of the length of the receptacle. Each of the male form engagement means 14 comprises a shank portion 16 of generally circular cross-section terminated by generally disc shaped head portion 18 integral with the shank portion 16, which in turn is integral with its associated side wall 12.

Corresponding studs 14 are formed at corresponding positions on the opposite wall 12 of the receptacle 10.

Each of the other two walls of the receptacle 10 are formed with a pair of female form engagement means 20 which are positioned at the same locations along the axis of the receptacle of the wall 12 as the studs 14 are positioned on the first pair of side walls 12.

Each female form engagement means 20 comprises a dumbbell shaped aperture. Thus, the aperture 20 comprises two circular portions 22 joined by a neck portion 24. The neck portion is slightly wider at its centre 26 than it is at its ends. The diameter of each circular portion 22 is slightly greater than the diameter of each disc shaped head 18 of each stud 14. The width of the neck portion 24 of each aperture 20 is sufficient to accommodate the shank portion 16 of each stud 14 but is substantially narrower than the diameter of the head portion 18 of each stud 14.

One end of the receptacle 10 is formed with a plurality of axially extending slots 28 which are open at that end of the receptacle 10.

On each wall which is provided with studs 14, there is provided a transversely extending rib 30 located half-way along each receptacle 10, and mid-way between the two studs 14 of that side wall 12.

Each side wall 12 which is provided with apertures 20 is provided with a transversely extending groove 32 located half-way along the receptacle and mid-way between the two apertures 20 on that side wall 12.

It will be appreciated that all the studs 14 are of the same shape and size as one another and all of the apertures 20 are of the same shape and size as one another.

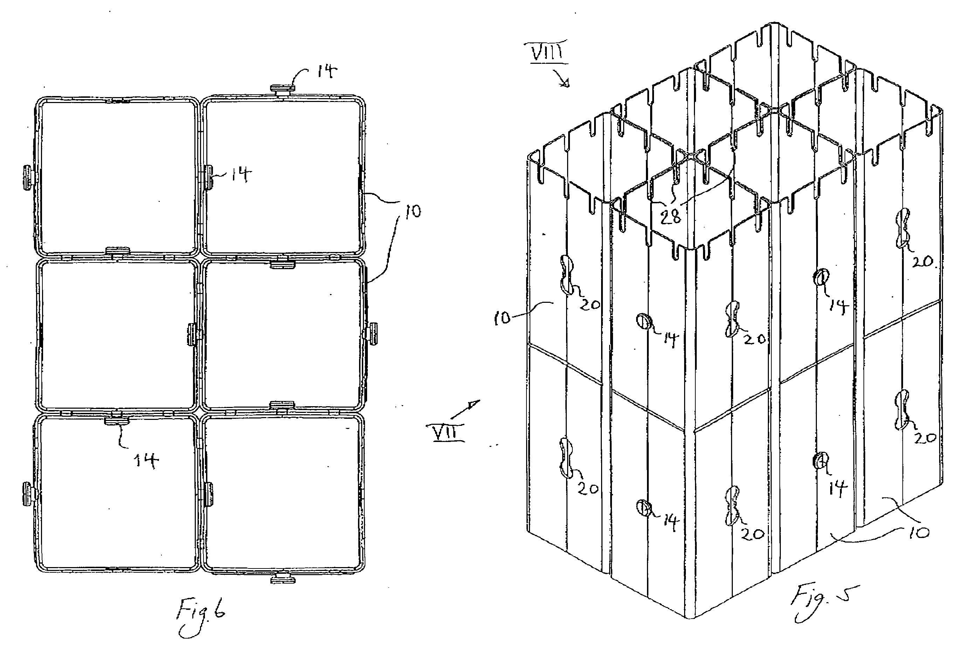

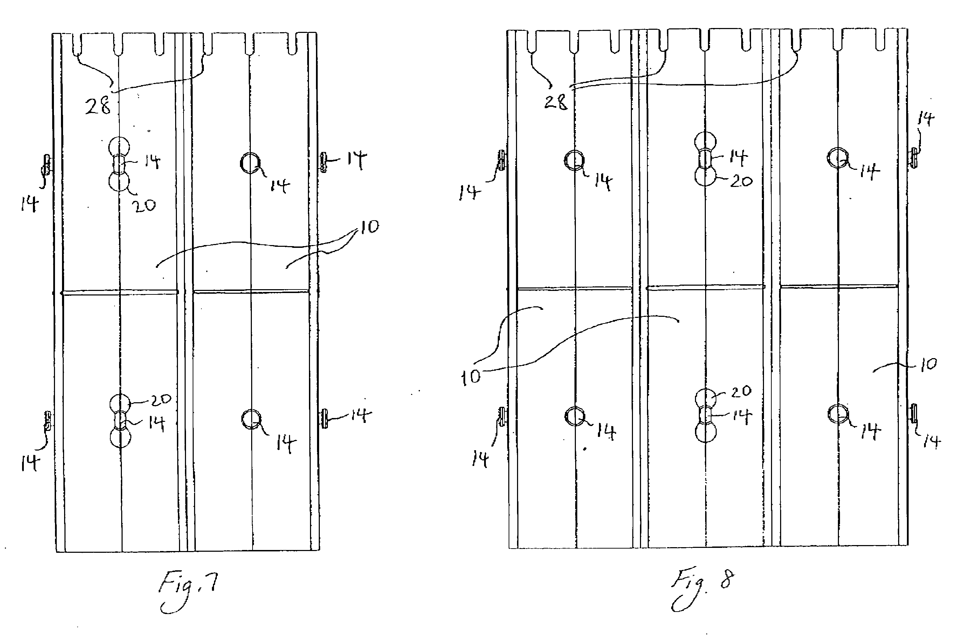

A multiplicity of receptacles each as shown in Figures 1 to 4 may be readily releasably secured together with their axes generally parallel to one another to form, when viewed along those axes, a matrix of receptacles as shown in Figures 5 to 8.

To create this matrix, a first receptacle as shown in Figures 1 to 4 is coupled to a second such receptacle by inserting the two studs 14 on one face 12 of the first receptacle into the apertures 20 in a wall 12 of the second receptacle, the heads 18 being passed through respective circular portions 22 of the apertures 20 to achieve this.

The two receptacles are then urged relative to one another in opposite directions along their respective axes to slide the shank portion 16 on the studs 14 of the first receptacle into the neck portion 24 of the apertures 20 of the second receptacle. The wider central portions 26 of the neck portions 24 facilitate a snap fit of the shank 16 in the neck portions 24. Also, the rib 30 of the wall 12 which is immediately adjacent to the second receptacle engages the immediately adjacent groove 32 of the second receptacle to improve the coupling between the two receptacles.

A matrix of receptacles can be built up further by securing further receptacles to those which have already been joined together, in similar fashion, to create the matrix shown in Figures 5 to 8, in which the matrix comprises two rows and three columns of receptacles, that is to say a matrix of two by three receptacles, as viewed along the axes thereof.

Such a matrix can be readily inserted into a plastics box or a fabric bag. Fishing lures may be inserted into the receptacles 10 respectively with one hook of the triple hook of each lure being hooked into one of the slots 28. The whole matrix with the lures inside can be readily lifted from the bag or box, and hosed down from above, the fact that the receptacles are open at each end facilitating such washing or rinsing with clean water.

It would be appreciated that the receptacles 10 of the matrix shown in Figures 5 to 8 may be readily dismantled and reassembled into a matrix of a different form suitable for a different bag or suitable for more or fewer lures, for example. The dismantling of a matrix as shown in Figures 5 to 8 occurs by steps executed in the reverse order of assembly. Thus, one of the receptacles of the matrix is slid along its axis relative to the other receptacles until the shanks 16 and its studs 14 escape the neck portions 24 of the female apertures through which they extend so that the heads 18 of those studs 14 can be passed outwardly through circular portions 22 of the aperture 20. At the same time, a corresponding disengagement would occur between apertures 20 of that receptacle and the studs 14 of the other or another adjacent receptacle.

Numerous variations and modifications to the illustrated receptacle may occur to the reader without taking the construction outside the scope of the present invention. For example, the receptacle may be hexagonal in cross-section and a matrix of such receptacles would be built up to form a honeycomb-like construction. Whereas each side wall of the receptacle is formed with two engagement means which are of the same form, it would be possible to have one of them of male form and the other of female form.

## Claims

1. A receptacle (10), especially but not exclusively for a fishing lure, comprising side walls (12) which define a hollow cylinder, **characterised in that** the side walls (12) are provided with engagement means (14, 20) to enable a multiplicity of such receptacles (10) to be releasably secured together with their respective axes generally parallel to one another and such that they form a matrix of receptacles (10) as viewed along their axes.

2. A receptacle (10) according to claim 1, **characterised in that** the receptacle (10) is generally rectangular in cross-section.

3. A receptacle (10) according to claim 2, **characterised in that** the receptacle (10) is generally square in cross-section.

4. A receptacle (10) according to claim 1, **characterised in that** the receptacle (10) is generally hexagonal in cross-section.

5. A receptacle (10) according to any preceding claim, **characterised in that** the engagement means (14, 20) comprise both male (14) and female (20) forms.

6. A receptacle (10) according to claim 5, **characterised in that** successive walls (12) of the receptacle progressing around the axis of the receptacle are provided at a given position along that axis with engagement means which alternate between male (14) and female (20) forms.

7. A receptacle (10) according to claim 7 read as appended to claim 2 or claim 3, **characterised in that** a pair of opposite sides (12) of the rectangle or square are formed with male form engagement means (14) and the other pair of opposite side walls (12) are provided with female form engagement means (20) at that position.

8. A receptacle (10) according to any preceding claim, **characterised in that** the receptacle (10) is generally elongate and each side wall (12) of the receptacle is provided with two engagement means (14, 20) spaced apart along the axis of the cylinder.

9. A receptacle (10) according to claim 8, **characterised in that** for each wall (12) the said two engagement means (14, 20) are both female (20), or both male (14).

10. A receptacle (10) according to claim 8, **characterised in that** for each wall (12) the said two engagement means (14, 20) consist of one male (14) and one female form (20).

11. A receptacle (10) according to any one of claims 5 to 10, **characterised in that** each male form engagement means (14) comprises a shank portion (16) which extends outwardly from a side wall (12) of the receptacle (10), terminating at a head portion (18).

12. A receptacle (10) according to claim 11, **characterised in that** the shank portion (16) has a generally circular cross-section and the head portion (18) is generally disc shaped, with a cross-section larger than that of the shank portion (16).

13. A receptacle (10) according to claim 11 or claim 12, **characterised in that** the length of the shank portion (16) is no more than sufficient to accommodate the thickness of the wall (12) of an adjacent receptacle (10) when the receptacle (10) forms part of a matrix of receptacles (10).

14. A receptacle (10) according to any one of claims 11 to 13, **characterised in that** each female engagement means (20) comprises an aperture in the form of a keyhole such that the larger end portion thereof is sufficiently large to enable the disc-shaped head portion (18) of the male form (14) to pass through it, whereas the narrower end of the aperture is sufficiently wide to accommodate the shank portion (16) of the male form (14), but too narrow to enable the head portion (18) of the male form (14) to be passed through it.

15. A receptacle (10) according to any one of claims 11 to 13, **characterised in that** each female engagement means (20) comprises an aperture in the form of a dumbbell shape such that one of the end portions (22) thereof is sufficiently large to enable the disc-shaped head portion (18) of the male form (14) to pass through it, whereas the bridging portion (24) of the aperture is sufficiently wide to accommodate the shank portion (16) of the male form (14), but too narrow to enable the head portion (18) of the male form (14) to be passed through it.

16. A receptacle (10) according to claim 14, **characterised in that** the narrower end portion of the keyhole shape aperture has a wider end portion so that the shank portion (16) of the male form (14) will snap fit into that end portion.

17. A receptacle (10) according to claim 15, **characterised in that** the bridging portion (24) of the dumbbell shape aperture (20) has a wider central portion (26) so that the shank portion (16) of the male form (14) will snap fit into that central portion (26).

18. A receptacle (10) according to any preceding claim, **characterised in that** an end of the receptacle is formed with axially extending slots (28) opening out at that end of the cylinder to facilitate the attachment of the hook of a fishing lure or other device.

19. A receptacle (10) according to any preceding claim, **characterised in that** the receptacle (10) is provided with further engagement means in the form of a rib (30) or a groove (32) on the outside of each side wall (12) of the receptacle (10), ribs (30) and grooves (32) alternating with one another as one progresses around the axis of the receptacle (10).

20. A receptacle (10) according to any preceding claim, **characterised in that** the receptacle (10) is open at both ends to facilitate drainage and easy washing or rinsing of the fishing lures or other contents held in the receptacle (10).

21. A matrix of receptacles (10) each as claimed in any preceding claim and each releasably secured to adjacent receptacles (10) of the matrix by way of the engagement means (14, 20) with the respective axes of the receptacles (10) being generally parallel to one another.
